Europäisches Patentamt

European Patent Office

Office européen des brevets

(11) Veröffentlichungsnummer: **0 034 315**
**B1**

(12) **EUROPÄISCHE PATENTSCHRIFT**

(45) Veröffentlichungstag der Patentschrift: 09.01.85

(21) Anmeldenummer: 81100874.7

(22) Anmeldetag: 07.02.81

(51) Int. Cl.⁴: **B 60 K 17/20**

(54) **Kraftfahrzeug mit einer Differentialsperre.**

(30) Priorität: 14.02.80 DE 3005467

(43) Veröffentlichungstag der Anmeldung:
26.08.81 Patentblatt 81/34

(45) Bekanntmachung des Hinweises auf die
Patenterteilung:
09.01.85 Patentblatt 85/02

(84) Benannte Vertragsstaaten:
FR GB IT SE

(56) Entgegenhaltungen:
FR-A-2 380 158
FR-A-2 434 969
US-A-3 831 462
US-A-4 162 712

(73) Patentinhaber: **M.A.N. MASCHINENFABRIK
AUGSBURG-NÜRNBERG Aktiengesellschaft
Dachauer Strasse 667 Postfach 50 06 20
D-8000 München 50 (DE)**

(72) Erfinder: **Görge,Werner, Dr.-Ing.
Pötschenerstrasse 21
D-8035 Gauting (DE)**

Courier Press, Leamington Spa, England.

EP 0 034 315 B1

**Beschreibung**

Die Erfindung bezieht sich auf ein Kraftfahrzeug mit einer manuell schaltbaren Differentialsperre (Fuß oder Handschalter) und mit einer zusätzlichen, dem Handschalter untergeordneten automatischen Schaltvorrichtung.

Bei Kraftfahrzeugen, insbesondere bei Omnibussen für den öffentlichen Linienverkehr tritt im Winter häufig der Fall auf, daß das eine Antriebsrad, z. B. in einer Haltebucht, auf Schnee oder Eis steht, während das andere Antriebsrad schon auf geräumter oder gestreuter Fahrbahn steht. Dadurch ergibt sich im Anfahrbereich, besonders an Haltestellen eine übergroße Belastung der Achsdifferentiale infolge Durchdrehens eines Antriebsrads. Die Verwendung üblicher, von Hand schaltbarer Sperrdifferentiale für diesen Betriebsfall hat den Nachteil, daß die Fahrer der Busse entweder zu oft einen Fuß- oder Handschalter betätigen müssen, um an jeder Haltestelle das Differential aus- und danach wieder einzuschalten, oder aber, daß, wenn eine solche häufige Schaltung vom Fahrer nicht durchgeführt wird und die Diffferentialsperre ständig eingeschaltet gelassen wird, hohe Reibungsverluste auftreten, die sich als hoher Kraftstoffverbrauch und hoher Reifenverschließ niederschlagen, oder daß die Sperre überhaupt nicht betätigt wird und beim Anfahren eines der Räder durchdreht, was zu Schäden des Differentials führt. Insbesondere bei Fahrzeugen mit Automatikgetriebe treten diese Schäden auf, da das Durchrutschen eines Antriebsrades vom Fahrer nicht wahrgenommen wird.

Aufgabe der vorliegenden Erfindung ist es, diese Nachteile zu vermeiden und ein Kraftfahrzeug mit einer Differentialsperre zu schaffen, das ohne dauernden Schalteingriff des Fahrers sich ungünstigen Fahrbahnverhältnissen, insbesondere beim Anfahren anpaßt.

Zur Lösung dieser Aufgabe wird erfindungsgemäß vorgeschlagen, daß im Stillstand des Fahrzeugs die Differentialsperre einschaltet und bei Erreichen einer Mindestdrehzahl der beiden Antriebshalbwellen die Differentialsperre abschaltet.

Die Erfindung löst die gestellte Aufgabe mit vergleichsweise einfachen Mitteln, indem lediglich ein drehzahlabhängiger Schalter, der jederzeit zusätzlich in herkömmliche Schaltkreise für Kraftfahrzeuge eingebaut werden kann, zur Anwendung kommt. Die Abtastung der steuernden Mindestdrehzahl kann dabei an den beiden Achshalbwellen erfolgen oder im Gelenkwellenstrang. In jedem Fall ist sichergestellt, daß die Differentialsperre nicht über langere Zeit bzw. Fahrstrecke eingeschaltet bleibt.

Eine ähnliche Lösung der gestellten Aufgabe erfolgt mit den Merkmalen gemäß Patentanspruch 2, wobei als Zeitschaltvorrichtungen herkömmliche Verzögerungsschalter elektrischer oder pneumatischer Bauart zur Anwendung kommen können. Auch solche Schalter sind ohne Schwierigkeit nachtraglich in bestehende Schaltkreise für Differentialsperren einbauber.

Schließlich besteht eine weitere Lösung der gestellten Aufgabe darin, daß bei einem gattungsgemäßen Kraftfahrzeug eine zusätzliche, der manuellen Schaltung untergeordnete automatische Schaltvorrichtung vorgesehen ist, die bei Erreichen einer Mindestdifferenzdrehzahl der beiden Antriebshalbwellen die Differentialsperre einschaltet. Diese Vorrichtung, die das Ein- und Ausschalten der Differentialsperre noch genauer an die bestehenden Traktionsverhältnisse anpaßt als die vorgenannten Lösungen ist zwar etwas aufwendiger, indem zumindest zwei Drehzahlsensoren an den Antriebshalbwellen der Antriebsachse benötigt werden und indem zusätzlich eine Vergleichseinrichtung vorgesehen sein muß, ist jedoch dennoch ohne Schwierigkeiten in herkömmliche Kraftfahrzeuge einbauber.

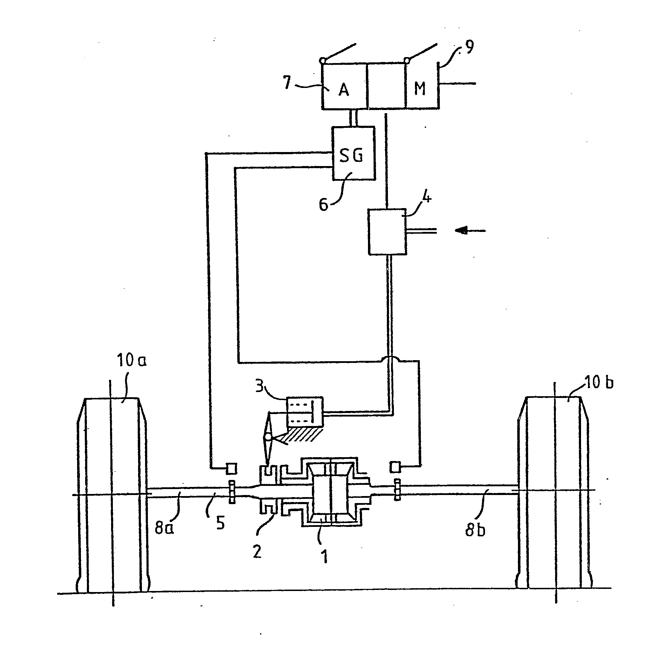

Anhand der beigefügten Zeichnung werden die Ausführungsformen der Erfindung erläutert. Die Zeichnung zeigt schematisch eine Antriebsachse eines Kraftfahrzeugs mit Differential und Differentialsperre sowie den Steuerkreis für die Differentialsperre.

In der Zeichnung sind Antriebsräder 10a, 10b einer Antriebsachse gezeigt, die über Achshalbwellen 8a, 8b von einem Differential 1 aus angetrieben werden. Am Differential 1 ist eine übliche Differentialsperre 2 vorgesehen, die eine drehsteife Kopplung der beiden Differentialhalbwellen 8a, 8b herbeiführen kann, so daß sich diese Achshalbwellen mit gleicher Drehzahl drehen. Die Differentialsperre 2 wire über einen Betätigungszylinder 3 betätigt, der üblicherweise über eine Pneumatikventil 4 mit Druckluft beaufschlagt wird. Die Steuerung des Pneumatikventils 4 erfolgt elektrisch über einen Handschalter 9. Zusätzlich kann das Pneumatikventil 4 über eine automatische Schaltung 7 erfolgen, wobei die automatische Schaltung 7 der Handschaltung 9 untergeordnet sein soll, d. h. daß mit dem Handschalter 9 jederzeit die gewünschte Schaltstellung der Differentialsperre 2 herbeiführbar ist, unabhängig davon, wie die automatische Schaltung 7 gerade eingestellt ist. Die automatische Schaltung 7 wird im gezeigten Ausführungsbeispiel von einem Vergleicher 6 gesteuert, der die Drehzahlen der beiden Achshalbwellen 8a, 8b miteinander vergleicht. Zu diesem Zweck sind an den Achshalbwellen Drehzahlsensoren 5 vorgesehen. Bei Erreichen einer Mindestdifferenzdrehzahl, die vorzugsweise am Vergleicher 6 einstellbar sein soll, erfolgt ein Schaltimpuls zur automatischen Schaltung 7, die dann ihrerseits das pneumatische Ventil 4 so betätigt, daß die Differentialsperre 2 eingeschaltet wird, d. h. die Achshalbwellen 8a, 8b drehfest miteinander verbunden werden. Sobald die Differenzdrehzahl unter dem eingestellten Wert am Vergleicher 6 abfällt, wird über die automatische Schaltung 7 das pneumatische Schaltventil 4 wieder umgeschaltet und damit die Differentialsperre 2 gelöst.

Bei einer einfacheren Ausführungsform ist nur ein Drehzahlsensor 5 vorhanden, der auch an anderer Stelle des Antriebsstranges sitzen kann. In diesem Fall ist anstelle eines Vergleichers 6 ein Schwellwertschalter vorgesehen, der ausgehend von der Drehzahl Null bis zu einer gewünschten einstellbaren Maximaldrehzahl die Differentialsperre 2 eingeschaltet hält und dann einen Schaltimpuls über die automatische Schaltung 7 und das pneumatische Ventil 4 zur Abschaltung der Differentialsperre 3 gibt.

Bei einer dritten Ausführungsform kann anstelle des Vergleichers 6 ein Verzögerungsschalter vorgesehen sein, der nach Fabrbeginn, d. h. von dem Zeitpunkt ab. von dem die Drehzahl von Null verschieden ist, eine gewisse Zeitdauer verstreichen läßt und danach die automatisch bei Stillstand ständig eingeschaltete Differentialsperre abschaltet.

**Patentansprüche**

1. Kraftfahrzeug mit einem Handschalter schaltbaren Differentialsperre (Fuß- oder Handschaltung) und mit einer zusätzlichen, dem Handschalter untergeordneten automatischen Schaltvorrichtung, dadurch gekennzeichnet, daß im Stillstand des Fahrzeugs die Differentialsperre (2) einschaltet und bei Erreichen einer Mindestdrehzahl der beiden Antriebshalbwellen (8a, 8b) abschaltet.

2. Kraftfahrzeug mit einem Handschalter schaltbaren Differentialsperre (Fuß- oder Handschaltung) und mit einer zusätzlichen, dem Handschalter untergeordneten automatischen Schaltvorrichtung, dadurch gekennzeichnet, daß die automatische Schaltvorrichtung die Differentialsperre (2) im Stillstand des Fahrzeugs einschaltet und nach vorgegebener Einschaltdauer abschaltet.

**Revendications**

1. Véhicule comportant un blocage de différentiel pouvant être commandé au moyen d'une commande manuelle, (commande au pied ou à la main) et un dispositif de commande automatique supplémentaire subordonné à la commande manuelle, caractérisé en ce qu'à l'arrêt du véhicule, le blocage du différentiel 2 est enclenché et en ce qu'il est mis hors service lorsque l'on atteint une vitesse de rotation minimale des deux demi-arbres moteurs (8a, 8b).

2. Véhicule comportant un blocage de différentiel pouvant être commandé au moyen d'une commande manuelle, (commande au pied ou à la main) et un dispositif de commande automatique supplémentaire subordonné à la commandande manuelle, caractérisé en ce que le dispositif de commande automatique enclenche le blocage du différentiel 2 à l'arrêt du véhicule et le met hors service après une durée d'enclenchement prédéterminée.

**Claims**

1. A motor vehicle having a differential lock adapted to be engaged and disengaged by means of a hand switch (foot or hand actuation), and having an additional automatic actuating device which can be over-ridden by the hand switch, characterised in that the differential lock (2) engages when the vehicle is stationary and disengages when the two drive half-shafts (8a, 8b) reach a minimum speed.

2. A motor vehicle having a differential lock adapted to be engaged and disengaged by means of a hand switch (foot or hand actuation), and having an additional automatic actuating device which can be over-ridden by the hand switch, characterised in that the automatic actuating device engages the differential lock (2) when the vehicle is stationary and disengages it after a predetermined period of engagement.